# EUROPEAN PATENT APPLICATION

(11) **EP 4 722 553 A1**
(43) Date of publication of application: **08.04.2026**
(21) Application number: 24811099.1
(22) Date of filing: 21.05.2024
(51) Int. Cl.: F16C 33/46, F16C 19/26

(54) **CYLINDRICAL ROLLER BEARING**

(30) Priority: 24.05.2023 JP 2023085523
(71) Applicant: NSK LTD., Tokyo 141-8560 (JP)
(72) Inventor: MAEDA, Koki, Fujisawa-shi, Kanagawa 251-8501 (JP); MURAI, Takashi, Fujisawa-shi, Kanagawa 251-8501 (JP)
(74) Representative: Grünecker Patent- und Rechtsanwälte PartG mbB
(86) International application number: PCT/JP2024/018624
(87) International publication number: WO 2024/242092

(57) **Abstract**

A circumferential side surface (23a) of a column part (23) has a shape following a rolling surface (13a) of a cylindrical roller (13) on a pitch circle PCD passing through the axial center of a plurality of cylindrical rollers (13), and a circumferential gap C between the cylindrical roller (13) on the pitch circle PCD and the circumferential side surface (23a) of the column part (23) is smaller than the diameter DW × 0.01 of the cylindrical roller (13). A distance X by which the cylindrical roller (13) positioned on the pitch circle PCD can move radially outward with respect to a retainer (20) is greater than 1/2 of a radial internal gap Z of a bearing (10). There is thereby provided a cylindrical roller bearing having a long service life.

## Description

### TECHNICAL FIELD

The present invention relates to a cylindrical roller bearing.

### BACKGROUND ART

A cylindrical roller bearing, which is a type of rolling bearing, includes an inner ring, an outer ring, a plurality of cylindrical rollers disposed between the inner ring and the outer ring, and a cage that rotatably holds each cylindrical roller in a pocket.

In the cylindrical roller bearing, when the inner ring and the outer ring rotate relative to each other, the cylindrical roller in the pocket rotate, which may cause friction between the cylindrical roller and a guide surface of the cage, resulting in a behavior abnormality of the cage, or friction and slippage between the inner and outer rings and the cylindrical roller, which has a negative impact on the life of the bearing. On the other hand, in a mechanical device using a cylindrical roller bearing, the mechanical device is required to have a long life, and therefore the cylindrical roller bearing is also required to have a long life.

Patent Literature 1 discloses a roller bearing in which a cage pocket is formed in a tapered shape that narrows toward an outer diameter side, and a pocket gap, which is a circumferential gap between a roller located on a pitch circle and a pocket surface, is less than a radial movement amount, which is a distance a roller can move radially in a pocket, thereby avoiding simultaneous contact of rollers on tapered surfaces on both sides of the cage pocket, and improving the discharge of a lubricant and preventing abnormal temperature rises.

### CITATION LIST

### PATENT LITERATURE

Patent Literature 1: JP2022-54811A

### SUMMARY OF INVENTION

### TECHNICAL PROBLEM

In the roller bearing described in Patent Literature 1, the pocket gap and the radial movement amount are defined to prevent temperature rises of the bearing, but in order to extend the life of the cylindrical roller bearing, further consideration is needed to appropriately maintain the movement of the roller using the cage.

The present invention has been made in view of the above problems, and an object of the present invention is to provide a cylindrical roller bearing that has a long life by appropriately maintaining the movement of a roller using a cage.

### SOLUTION TO PROBLEM

Therefore, the above object of the present invention is achieved by the following configuration [1] related to a cylindrical roller bearing.
[1] A cylindrical roller bearing including:
   an outer ring having an outer ring raceway on an inner circumferential surface thereof;
   an inner ring having an inner ring raceway on an outer circumferential surface thereof;
   a plurality of cylindrical rollers rotatably disposed between the outer ring raceway and the inner ring raceway; and
   a cage having a first annular portion and a second annular portion that face each other in an axial direction, and a plurality of column portions that connect the first annular portion and the second annular portion in the axial direction and are spaced apart in a circumferential direction, the cage being configured to rotatably hold the plurality of cylindrical rollers in a plurality of pockets defined by the first annular portion, the second annular portion, and the plurality of column portions, in which
   a circumferential side surface of each of the column portions has, on a pitch circle passing through axial centers of the plurality of cylindrical rollers, a shape that matches a rolling surface of each of the cylindrical rollers over the axial direction,
   a circumferential gap C between the cylindrical roller and the circumferential side surface of the column portion on the pitch circle of the plurality of cylindrical rollers satisfies C < 0.01 × DW, where DW is a diameter of the cylindrical roller, and
   a distance X by which the cylindrical roller, whose axial center is located on the pitch circle, is movable radially outward with respect to the cage satisfies X > Z/2, where Z is a maximum value of a radial internal gap of the bearing.

### ADVANTAGEOUS EFFECTS OF INVENTION

According to the cylindrical roller bearing of the present invention, the life of the cylindrical roller bearing can be extended by appropriately maintaining the movement of the roller using the cage.

### BRIEF DESCRIPTION OF DRAWINGS

FIG. 1 is a side view of a cylindrical roller bearing according to a first embodiment of the present invention.
FIG. 2 is a front view of a cage of the cylindrical roller bearing illustrated in FIG. 1.
FIG. 3 is an enlarged view illustrating a state in which centers of an outer ring, an inner ring, and the cage are aligned, and a cylindrical roller is located in the center of a pocket of the cage (the center of the roller is on a pitch circle, and a circumferential gap C is equal on left and right sides).
FIG. 4 is an enlarged view illustrating an axial shape of a circumferential side surface of a column portion and a shape of a rolling surface of the cylindrical roller on the pitch circle.

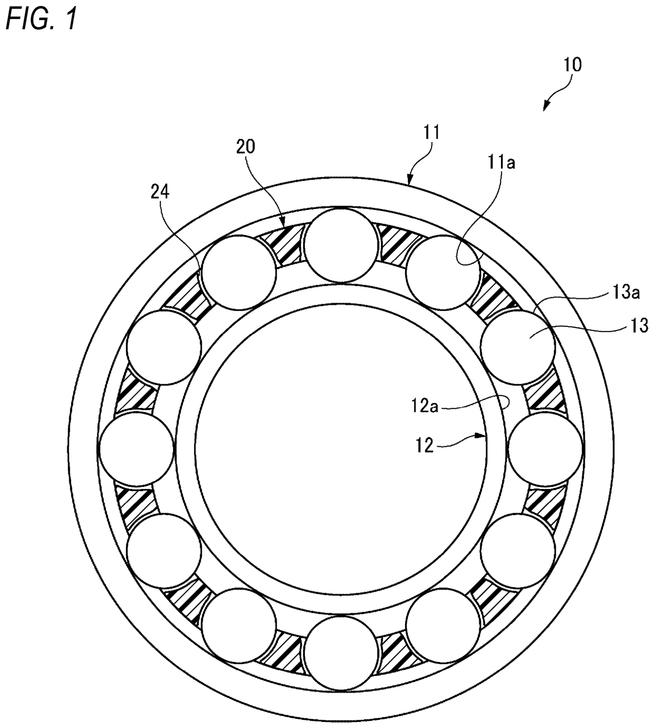

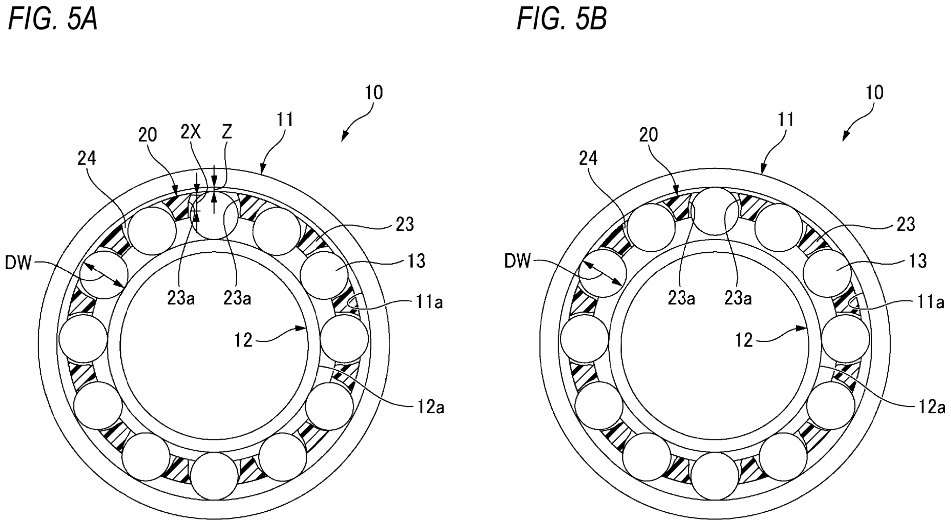

FIG. 5A is a side view of the cylindrical roller bearing of FIG. 1, illustrating a state in which a cylindrical roller located above is in contact with the inner ring without interfering with the cage, under predetermined conditions in which the inner ring is offset downward and a cylindrical roller located below is in contact with the outer ring and the inner ring, and in which the cage is offset upward and is in contact with the cylindrical roller located below, and FIG. 5B is a side view illustrating a state in which the cylindrical roller located above is in contact with the outer ring without interfering with the cage under the predetermined conditions of FIG. 5A.
FIG. 6 is an enlarged view illustrating the cylindrical roller bearing in which a circumferential gap between the cylindrical roller and the circumferential side surface of the column portion is reduced, the centers of the outer ring, the inner ring, and the cage are aligned, and the cylindrical roller is located in the center of a pocket of the cage.

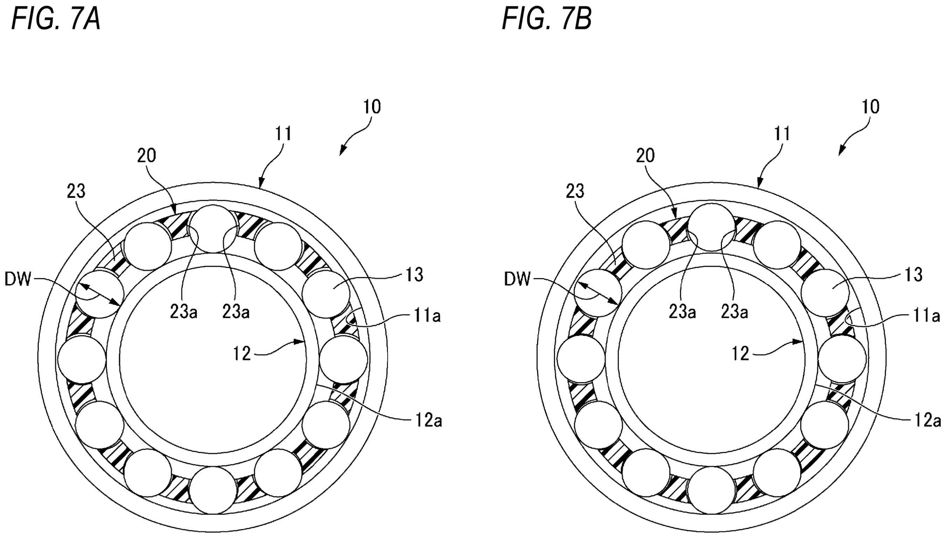

FIG. 7A is a side view of a cylindrical roller bearing of a comparative example, illustrating a state in which the cylindrical roller located above is in contact with the inner ring without interfering with the cage, under predetermined conditions in which the inner ring is offset downward and the cylindrical roller located below is in contact with the outer ring and the inner ring, and in which the cage is offset upward and is in contact with the cylindrical roller located below, and FIG. 7B is a side view of the cylindrical roller bearing, illustrating a state in which the cylindrical roller located above interferes with the cage under the predetermined conditions of FIG. 7A.
FIG. 8 is an enlarged view illustrating a tapered roller using a cage according to a second embodiment of the present invention, in which centers of an outer ring, an inner ring, and a cage are aligned, and a cylindrical roller is located in the center of a pocket of the cage.

### DESCRIPTION OF EMBODIMENTS

Hereinafter, embodiments of a cylindrical roller bearing according to the present invention will be described in detail with reference to the drawings.

### (First Embodiment)

As illustrated in FIG. 1, a cylindrical roller bearing 10 of the present embodiment includes an outer ring 11 having an outer ring raceway 11a on an inner circumferential surface thereof, an inner ring 12 having an inner ring raceway 12a on an outer circumferential surface thereof, a plurality of cylindrical rollers 13 disposed between the outer ring raceway 11a and the inner ring raceway 12a, and a cage 20 that rotatably holds the plurality of cylindrical rollers 13. In FIGS. 5A, 5B, 7A and 7B, dimensions of the cylindrical rollers 13 are slightly smaller so that gaps between the cylindrical rollers 13 and other members can be more clearly seen.

The outer ring 11 has a pair of flanges (not illustrated) protruding radially inward on both axial sides of an outer ring raceway surface 11a.

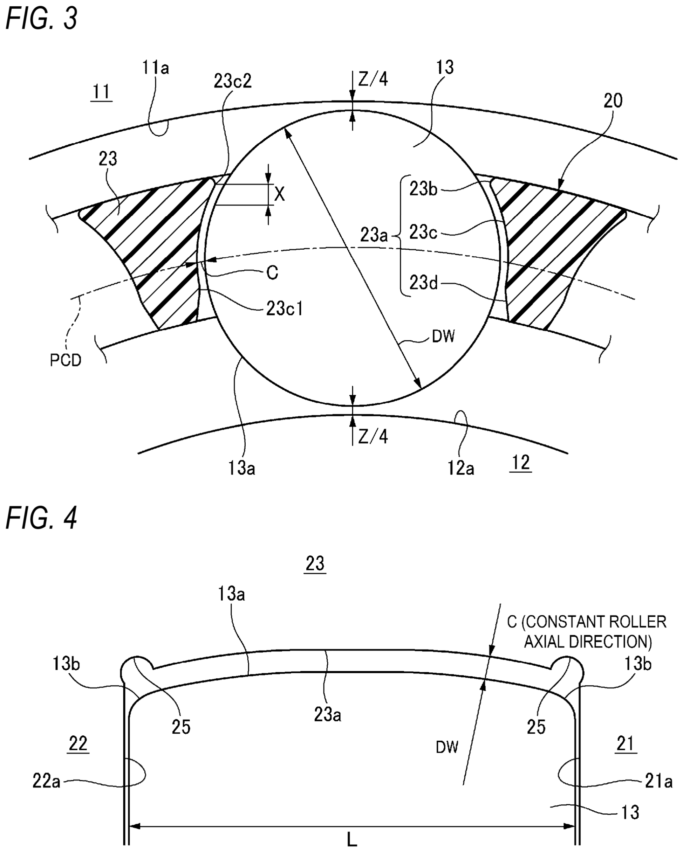

Referring to FIGS. 3 and 4 as well, each cylindrical roller 13 has a substantially cylindrical shape with a diameter DW and an axial length L, and a rolling surface 13a thereof is formed with crowning such as logarithmic crowning or partial crowning in which a central portion is a straight portion and both sides of the central portion are arcs.

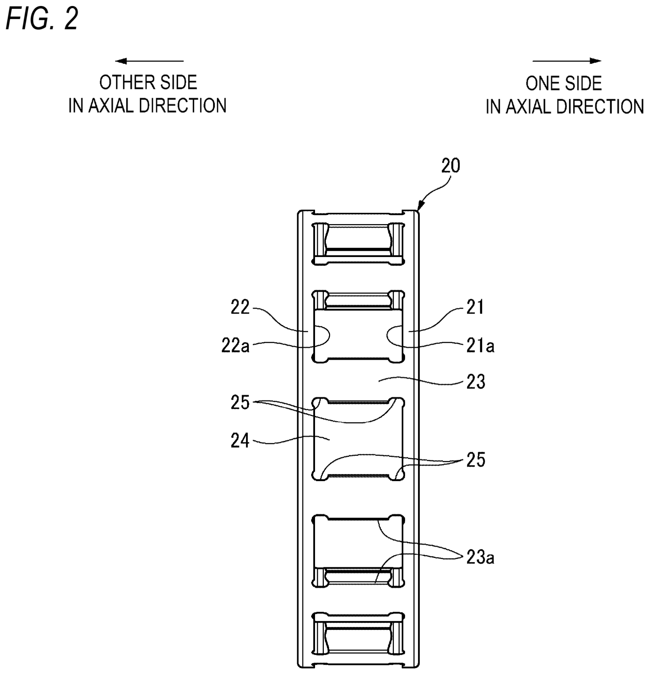

As illustrated in FIG. 2, the cage 20 includes a first annular portion 21 formed on one side in an axial direction, a second annular portion 22 formed on the other side in the axial direction so as to face the first annular portion 21 in the axial direction, and a plurality of column portions 23 that connect the first annular portion 21 and the second annular portion 22 in the axial direction and are spaced apart in a circumferential direction.

The cage 20 is formed with a plurality of pockets 24, each defined by a side surface 21a of the first annular portion 21 on the other side in the axial direction, a side surface 22a of the second annular portion 22 on the one side in the axial direction, and both circumferential side surfaces 23a of adjacent column portions 23. In each pocket 24, clearance grooves 25 are formed at corners between the side surface 21a of the first annular portion 21 on the other side in the axial direction and both circumferential side surfaces 23a of the column portions 23, and at corners between the side surface 22a of the second annular portion 22 on the one side in the axial direction and both circumferential side surfaces 23a of the column portion 23, respectively. The cylindrical rollers 13 are rotatably disposed in the respective pockets 24.

As illustrated in FIG. 3, when the cage 20 is viewed from the axial direction, the shape (radial shape) of each circumferential side surface 23a of each column portion 23 includes a chamfered portion 23b having a curved surface shape, a single arc portion 23c, and a linear portion 23d in order from an outer circumferential surface of the column portion 23. Assuming that a circle centered on a central axis of the cylindrical roller bearing 10 and passing through axial centers of the cylindrical rollers 13 is a pitch circle, the single arc portion 23c is formed in a single arc shape from a radial inner edge portion 23c1 to a radial outer edge portion 23c2 across a pitch circle PCD of the cylindrical rollers 13.

The circumferential side surface 23a of the column portion 23 may not have the chamfered portion 23b, and the single arc portion 23c may be formed to the outer circumferential surface of the column portion 23.

Although the linear portion 23d is inclined a circumferential width on an inner diameter side is increased, the circumferential width on the inner diameter side may be smaller than the diameter DW of the cylindrical roller 13, causing the column portion 23 to elastically deform and allowing the cylindrical roller 13 to be inserted.

When both the cylindrical roller 13 and the cage 20 are located on the pitch circle PCD, a circumferential gap C between the rolling surface 13a of the cylindrical roller 13 and the circumferential side surface 23a of the column portion 23 on the pitch circle PCD (hereinafter, also simply referred to as the circumferential gap C) is set to be smaller than 1% of the diameter DW of the cylindrical roller 13 (C < 0.01 × DW).

In this way, by setting the circumferential gap C between the rolling surface 13a of the cylindrical roller 13 and the circumferential side surface 23a of the column portion 23 to be smaller than 1% of the diameter DW of the cylindrical roller 13, the opportunity for contact between the cylindrical roller 13 in the pocket 24 and the circumferential side surface 23a of the column portion 23 is increased, the behavior of the cylindrical roller 13 is prevented, and the position of the cylindrical roller 13 is appropriately controlled.

By setting the circumferential gap C to be smaller than 1% of the diameter DW of the cylindrical roller 13, it is possible to reduce slippage that occurs not only within a non-load zone of the cylindrical roller bearing 10 but also between the cylindrical roller 13 and the outer ring 11 (outer ring raceway 11a), and between the cylindrical roller 13 and the inner ring 12 (inner ring raceway 12a) at an entrance (exit) of a load zone. Therefore, the degree of fatigue given to the outer ring 11 and the inner ring 12 is reduced by the number of repetitions, and a life extension effect can be obtained.

The reason why the life of the cylindrical roller bearing 13 can be extended by setting the circumferential gap C between the rolling surface 13a of the cylindrical roller 13 and the circumferential side surface 23a of the column portion 23 to be smaller than 1% of the diameter DW of the cylindrical roller 13 is that the behavior (skew or the like) of the cylindrical roller is prevented, and the cylindrical roller 13 comes into stronger contact with an inner surface of the pocket 24, temporarily increasing a friction force between the rotating cylindrical roller 13 and the inner surface of the pocket, thereby reducing the number of rotations of the cylindrical roller 13. As a result, a difference in a rotation speed between the cylindrical roller 13 and the inner and outer rings 12 and 11 is reduced, and the slippage of the cylindrical roller with respect to the inner and outer rings is reduced. (NSK Technical Journal No. 682)

The circumferential gap C between the rolling surface 13a of the cylindrical roller 13 and the circumferential side surface 23a of the column portion 23 is preferably set to be larger than 0.07% of the diameter DW of the cylindrical roller 13 (that is, 0.0007 × DW < C < 0.01 × DW). For example, in a cylindrical roller bearing having a roller diameter of 6 mm to 54 mm, the circumferential gap C is ensured even if the cylindrical roller 13 is skewed. Specifically, a lower limit of the circumferential gap C is determined by a relation between a flange clearance and a roller length, which is determined by a flange width and the roller length of the outer ring 11, and a relation between the roller length and the roller diameter, which is designed to be substantially 1:1.

Referring to FIG. 4, when the cage 20 is viewed in a radial direction, the shape (axial shape) of the circumferential side surface 23a of the column portion 23 is a shape matching the rolling surface 13a of the cylindrical roller 13, including the crowning portion. That is, the circumferential gap C between the rolling surface 13a of the cylindrical roller 13 and the circumferential side surface 23a of the column portion 23 is constant at any point in the axial direction except for the clearance grooves 25. Accordingly, the circumferential side surface 23a of the column portion 23 holds the cylindrical roller 13 in a surrounding manner, the cylindrical roller 13 can be prevented from being skewed, and the behavior of the cylindrical roller 13 can be further prevented.

The circumferential side surface 23a of the column portion 23 may have a shape matching the rolling surface 13a of the cylindrical roller 13 at least in the single arc portion 23c.

Further, a distance X by which the cylindrical roller 13 can move radially outward in the pocket 24 of the cage 20 is set to exceed 1/2 of a maximum value Z of a radial internal gap of the cylindrical roller bearing 10 (X > Z/2). The radial internal gap refers to a dimension in which the outer ring and the inner ring can be displaced in the radial direction.

Here, as illustrated in FIG. 5A, under predetermined conditions in which the inner ring 12 is offset downward and the cylindrical roller 13 located below is in contact with the outer ring 11 and the inner ring 12, and in which the cage 14 is offset upward and is in contact with the cylindrical roller 13 located below, a radial movement amount of the cylindrical roller 13 located above is 2X with respect to the maximum value Z of the radial internal gap. In the present embodiment, since X > Z/2, as illustrated in FIGS. 5A and 5B, in both cases where the cylindrical roller 13 located above rolls on the inner ring raceway 12a and where the cylindrical roller 13 located above rolls on the outer ring raceway 11a, a gap is always ensured between the cylindrical roller 13 located above and the circumferential side surface 23a of the column portion 23, and thus interference with the cage 14 is prevented and smooth rotation is ensured.

In FIG. 5A, the cage 14 is offset upward and is in contact with the cylindrical roller 13 located below, but even if the inner ring 12 is offset downward and the cylindrical roller 13 located below is in contact with the outer ring 11 and the inner ring 12, the cage 14 can actually move freely and can also rotate below with a gap between the cylindrical roller 13 and the cage 14.

Therefore, in the cylindrical roller bearing 10 of the present embodiment, the cylindrical roller 13 located above does not interfere with the circumferential side surface 23a of the column portion 23, regardless of a radial position thereof with respect to the cage 20, and thus abnormal wear of the cage 20 can be prevented and the life of the cylindrical roller bearing 10 can be extended. Since the circumferential side surface 23a of the column portion 23 has an axial shape that matches the rolling surface 13a of the cylindrical roller 13 and holds the cylindrical roller 13 in a surrounding manner, the cylindrical roller 13 is prevented from being skewed, and the behavior of the cylindrical roller 13 can be further prevented.

On the other hand, in a cylindrical roller bearing 10X as a comparative example in which X ≤ Z/2, as illustrated in FIG. 7A, under predetermined conditions in which the inner ring 12 is offset downward and the cylindrical roller 13 located below is in contact with the outer ring 11 and the inner ring 12, and in which the cage 14 is offset upward and is in contact with the cylindrical roller 13 located below, when the cylindrical roller 13 located above is rolling on the inner ring raceway 12a, the cylindrical roller 13 does not interfere with the circumferential side surface 23a of the column portion 23. However, when the cylindrical roller 13 starts to roll on the outer ring raceway 11a from the state illustrated in FIG. 7A to the state illustrated in FIG. 7B, the cylindrical roller 13 interferes with the circumferential side surface 23a of the column portion 23 on an outer diameter side. This not only prevents the cylindrical roller 13B from coming into contact with the outer ring raceway 11a, but may also cause abnormal wear of the circumferential side surface 23a.

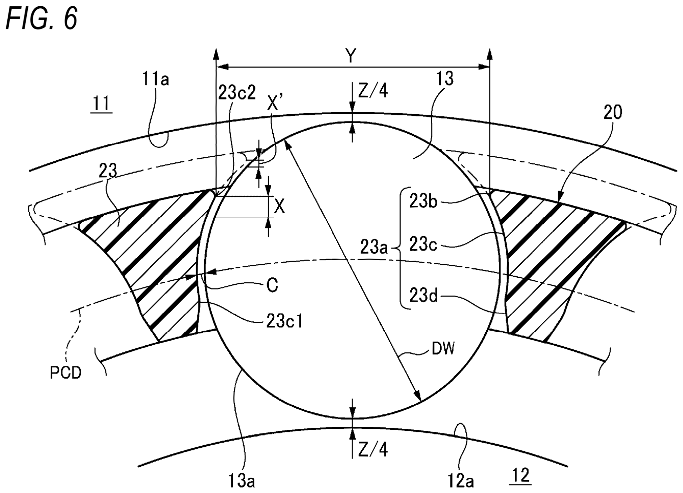

When reducing the circumferential gap C in an outer diameter of the column portion 23 of a cage in the related art as indicated by a dashed line in FIG. 6, a distance X' by which the cylindrical roller 13 can move radially outward in the pocket 24 cannot be increased. However, as indicated by a solid line in FIG. 6, by reducing the outer diameter of the column portion 23, the distance X can be increased and the condition of X > Z/2 can be satisfied.

In this way, by setting the gap C to be small while maintaining the distance X by which the cylindrical roller 13 can move radially outward at a required size, the position of the cylindrical roller 13 can be appropriately controlled, and the life of the cylindrical roller bearing 10 can be extended. Reducing the outer diameter of the column portion 23 also contributes to reducing the weight of the cage 20.

However, a minimum value of the outer diameter of the column portion 23 must satisfy a relation that a minimum distance Y between column portions 23 on the outer diameter side is less than the roller diameter DW, in order to prevent the cylindrical roller 13 from slipping out of the pocket 24 without load, and the outer diameter dimension is designed to provide this minimum distance Y.

As described above, according to the cylindrical roller bearing 10 of the present embodiment, by defining the circumferential gap C between the cylindrical roller 13 and the circumferential side surface 23a of the column portion 23, and the distance X by which the cylindrical roller 13 can move radially outward, the behavior of the cylindrical roller 13 can be prevented, and the interference between the cylindrical roller 13 and the circumferential side surface 23a of the column portion 23 can be prevented to extend the life of the cylindrical roller bearing 10.

### (Second Embodiment)

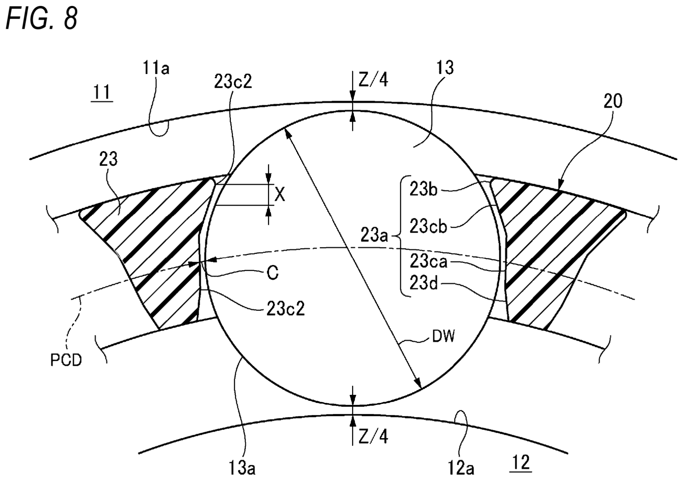

In the cylindrical roller bearing 10 of the second embodiment, as illustrated in FIG. 8, the circumferential side surface 23a of the column portion 23 has any discontinuous non-single arc shape such as a Gothic arch shape when the cage 20 is viewed from an axial direction, instead of the single arc portion 23c described in the first embodiment.

Therefore, when the cage 20 is viewed in the axial direction, the circumferential side surface 23a of the column portion 23 has a linear surface (flat surface) 23ca extending across the pitch circle PCD of the cylindrical roller 13 and a linear surface (flat surface) 23cb extending radially inward from the radial outer edge portion 23c. The linear surfaces 23ca and 23cb are formed to intersect each other.

Accordingly, the circumferential gap C between the cylindrical roller 13 and the circumferential side surface 23a of the column portion 23 can be reduced without changing an outer diameter dimension of the cage 20, a lubricant can be retained in the linear surfaces 23ca and 23cb, and the behavior of the cylindrical roller 13 can be prevented to extend the life of the cylindrical roller bearing 10.

The present invention is not limited to the above embodiments and can be appropriately modified, improved, and the like.

As described above, the following matters are disclosed in the present specification.
(1) A cylindrical roller bearing including:
   an outer ring having an outer ring raceway on an inner circumferential surface thereof;
   an inner ring having an inner ring raceway on an outer circumferential surface thereof;
   a plurality of cylindrical rollers rotatably disposed between the outer ring raceway and the inner ring raceway; and
   a cage having a first annular portion and a second annular portion that face each other in an axial direction, and a plurality of column portions that connect the first annular portion and the second annular portion in the axial direction and are spaced apart in a circumferential direction, the cage being configured to rotatably hold the plurality of cylindrical rollers in a plurality of pockets defined by the first annular portion, the second annular portion, and the plurality of column portions, in which
   a circumferential side surface of each of the column portions has, on a pitch circle passing through axial centers of the plurality of cylindrical rollers, a shape that matches a rolling surface of each of the cylindrical rollers over the axial direction,
   a circumferential gap C between the cylindrical roller and the circumferential side surface of the column portion on the pitch circle of the plurality of cylindrical rollers satisfies C < 0.01 × DW, where DW is a diameter of the cylindrical roller, and
   a distance X by which the cylindrical roller, whose axial center is located on the pitch circle, is movable radially outward with respect to the cage satisfies X > Z/2, where Z is a maximum value of a radial internal gap of the bearing.
   According to this configuration, the life of the cylindrical roller bearing can be extended by appropriately maintaining the movement of the roller using the cage.
(2) The cylindrical roller bearing according to (1), in which
   when the cage is viewed from the axial direction, the circumferential side surface of the column portion has a single arc shape formed to a radial outer edge portion across the pitch circle of the cylindrical roller.
   According to this configuration, it is easy to process the circumferential side surface of the column portion.
(3) The cylindrical roller bearing according to (1), in which
   when the cage is viewed from the axial direction, the circumferential side surface of the column portion has a non-single arc shape in which a linear surface across the pitch circle of the cylindrical roller and a linear surface extending radially inward from a radial outer edge portion intersect each other.
   According to this configuration, the circumferential gap between the cylindrical roller and the circumferential side surface of the column portion can be reduced, a lubricant can be retained in the portion where the surface across the pitch circle and the surface extending radially inward from the radial outer edge portion intersect each other, and the behavior of the cylindrical roller can be prevented to extend the life of the cylindrical roller bearing.
(4) The cylindrical roller bearing according to any one of (1) to (3), in which
   when the cage is viewed from the radial direction, the circumferential side surface of the column portion has a shape that matches the rolling surface of the cylindrical roller.
   According to this configuration, it is possible to prevent skew of the cylindrical roller and stabilize the behavior.

The present application is based on a Japanese patent application (No. 2023-085523) filed on May 24, 2023, contents of which are incorporated herein by reference.

### REFERENCE SIGNS LIST

10 cylindrical roller bearing
11 outer ring
11a outer ring raceway
12 inner ring
12a inner ring raceway
13 cylindrical roller
13a rolling surface
20 cage
21 first annular portion
22 second annular portion
23 column portion
23a circumferential side surface
23c single arc portion
23ca linear surface (surface across pitch circle of cylindrical roller)
23cb linear surface (surface extending radially inward from radial outer edge portion)
24 pocket
C circumferential gap between cylindrical roller and circumferential side surface of column portion
DW diameter of cylindrical roller
PCD pitch circle
X distance by which cylindrical roller can move radially outward with respect to cage
Z maximum value of radial internal gap

## Claims

1. A cylindrical roller bearing comprising:
an outer ring having an outer ring raceway on an inner circumferential surface thereof;
an inner ring having an inner ring raceway on an outer circumferential surface thereof;
a plurality of cylindrical rollers rotatably disposed between the outer ring raceway and the inner ring raceway; and
a cage having a first annular portion and a second annular portion that face each other in an axial direction, and a plurality of column portions that connect the first annular portion and the second annular portion in the axial direction and are spaced apart in a circumferential direction, the cage being configured to rotatably hold the plurality of cylindrical rollers in a plurality of pockets defined by the first annular portion, the second annular portion, and the plurality of column portions, wherein
a circumferential side surface of each of the column portions has, on a pitch circle passing through axial centers of the plurality of cylindrical rollers, a shape that matches a rolling surface of each of the cylindrical rollers over the axial direction,
a circumferential gap C between the cylindrical roller and the circumferential side surface of the column portion on the pitch circle of the plurality of cylindrical rollers satisfies C < 0.01 × DW, where DW is a diameter of the cylindrical roller, and
a distance X by which the cylindrical roller, whose axial center is located on the pitch circle, is movable radially outward with respect to the cage satisfies X > Z/2, where Z is a maximum value of a radial internal gap of the bearing.

2. The cylindrical roller bearing according to claim 1, wherein
when the cage is viewed from the axial direction, the circumferential side surface of the column portion has a single arc shape formed to a radial outer edge portion across the pitch circle of the cylindrical roller.

3. The cylindrical roller bearing according to claim 1, wherein
when the cage is viewed from the axial direction, the circumferential side surface of the column portion has a non-single arc shape in which a linear surface across the pitch circle of the cylindrical roller and a linear surface extending radially inward from a radial outer edge portion intersect each other.

4. The cylindrical roller bearing according to any one of claims 1 to 3, wherein
when the cage is viewed from the radial direction, the circumferential side surface of the column portion has a shape that matches the rolling surface of the cylindrical roller.
